**Europäisches Patentamt**

**European Patent Office**

**Office européen des brevets**

(11) Veröffentlichungsnummer : **0 092 664**
**B1**

(12) **EUROPÄISCHE PATENTSCHRIFT**

(45) Veröffentlichungstag der Patentschrift :
02.01.86

(51) Int. Cl.⁴ : **G 01 B 21/00, G 01 B 3/00**

(21) Anmeldenummer : 83101966.6

(22) Anmeldetag : 01.03.83

(54) **Gekapselte Längen- oder Winkelmesseinrichtung.**

(30) Priorität : 24.04.82 DE 3215336

(43) Veröffentlichungstag der Anmeldung :
02.11.83 Patentblatt 83/44

(45) Bekanntmachung des Hinweises auf die Patenterteilung : 02.01.86 Patentblatt 86/01

(84) Benannte Vertragsstaaten :
AT CH FR GB IT LI NL SE

(56) Entgegenhaltungen :
DE-C- 2 846 768

(73) Patentinhaber : **Dr. Johannes Heidenhain GmbH**
**Nansenstrasse 17**
**D-8225 Traunreut (DE)**

(72) Erfinder : **Burkhardt, Horst, Dr.**
**Fraueneichweg 12**
**D-8221 Truchtlaching (DE)**

**Beschreibung**

Die Erfindung betrifft eine gekapselte Längen- oder Winkelmeßeinrichtung, gemäß dem Oberbegriff des Anspruchs 1.

Die DE-C-28 46 768 zeigt eine gekapselte Längenmeßeinrichtung, bei der ein Maßstab und eine Abtasteinheit in einem Hohlkörper eingebracht sind, der einen in Meßrichtung durchgehenden Schlitz aufweist, der mittels dachförmig angeordneter Dichtelemente in Form von Kunststoff- oder Gummilippen verschlossen ist, durch die ein Mitnehmer hindurchgreift, um die Abtasteinheit mit einem zu messenden Objekt zu verbinden.

Bei der vorgenannten Meßeinrichtung müssen die Dichtlippen zur möglichst hermetischen Abschirmung des Gehäuses eng am Mitnehmer anliegen und daher elastisch mit hoher Rückstellkraft ausgebildet sein. Infolge der durch die hohen Rückstellkräfte auftretenden Reibungskräfte am Mitnehmer bei der Meßbewegung kann der Mitnehmer Deformationen in Meßrichtung erfahren, die der Meßgenauigkeit abträglich sind. Die Aufbiegung der Dichtlippen durch den Mitnehmer hat Tordierungen der Dichtlippen in Längserstreckung des Schlitzes zur Folge, so daß auch bei günstiger schwertförmiger Querschnittsausbildung des Mitnehmers kleine, von den Dichtlippen nicht verschlossene Bereiche an den Enden des Mitnehmers unvermeidlich sind.

Der Erfindung liegt die Aufgabe zugrunde, bei einer Meßeinrichtung der oben genannten Gattung Abdeckmittel für einen Gehäuseschlitz anzugeben, die eine weitgehend hermetische Abschirmung des Gehäuses ohne Beeinträchtigung der Meßgenauigkeit erlauben.

Diese Aufgabe wird erfindungsgemäß durch die kennzeichnenden Merkmale des Anspruchs 1 gelöst.

Die mit der Erfindung erzielten Vorteile bestehen insbesondere darin, daß die Dichtlippen infolge ihrer gelenkigen Ausbildung nur geringe Reibungskräfte auf den Mitnehmer bei der Meßbewegung ausüben und somit durch Verformungen des Mitnehmers bedingte Meßfehler weitgehend vermieden werden. Die durch die Gelenke getrennten Einzelbereiche der Dichtlippen besitzen eine größere Unabhängigkeit voneinander, so daß die Aufbiegungen der Dichtlippen im wesentlichen auf den Bereich des Mitnehmers beschränkt bleiben ; das Auftreten unverschlossener Bereiche an den Enden des Mitnehmers wird somit stark reduziert.

Weitere vorteilhafte Ausbildungen der Erfindung entnimmt man den Unteransprüchen.

Ausführungsbeispiele der Erfindung werden anhand der Zeichnung näher erläutert.

Es zeigen

Figur 1a, b einen Querschnitt und eine Ansicht einer gekapselten Längenmeßeinrichtung und

Figur 2a-g vergrößerte Ausschnitte mit Ausbildungen von Dichtlippen nach der Erfindung.

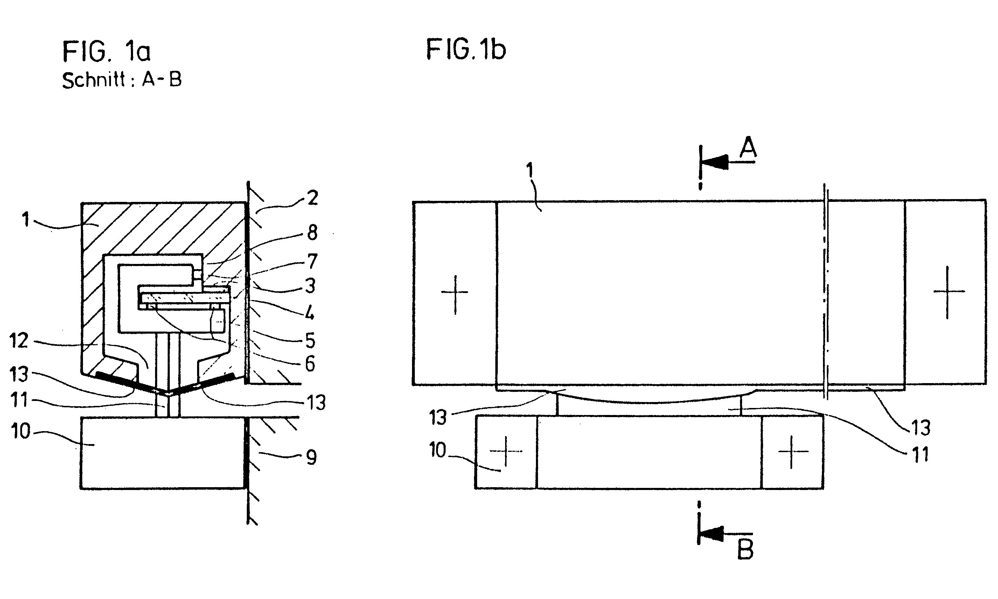

Gemäß Figur 1a, b ist das Gehäuse 1 in Form eines Hohlprofils einer inkrementalen Längenmeßeinrichtung in beliebiger Weise an einem Bett 2 einer nicht dargestellten Bearbeitungsmaschine befestigt. An einer Innenfläche des Gehäuses 1 ist mittels einer Klebeschicht 3 ein Maßstab 4 angebracht, dessen Teilung von einer Abtasteinheit 5 abgetastet wird, die in nicht gezeigter Weise eine Abtastplatte, eine Beleuchtungseinrichtung und Photoelemente aufweist. Die Abtasteinheit 5 stützt sich mittels Rollen 6 auf dem Maßstab 4 und mittels Rollen 7 an einer Führungsfläche 8 des Gehäuses 1 ab, die die Hilfsführung für die Abtasteinheit 5 bilden. An einem Schlitten 9 der Bearbeitungsmaschine ist in beliebiger Weise ein Montagefuß 10 mit einem Mitnehmer 11 befestigt, der durch einen Schlitz 12 in das Innere des Gehäuses 1 hineinragt und mit der Abtasteinheit 5 zur Messung der Relativlage zwischen dem Bett 2 und dem Schlitten 9 verbunden ist. Zur Vermeidung des Eindringens von Verunreinigungen in das Innere des ansonsten völlig geschlossenen Gehäuses 1 ist der Schlitz 12 durch zwei dachförmig angeordnete Dichtlippen 13 verschlossen, durch die der schwertförmig ausgebildete Mitnehmer 11 hindurchgreift.

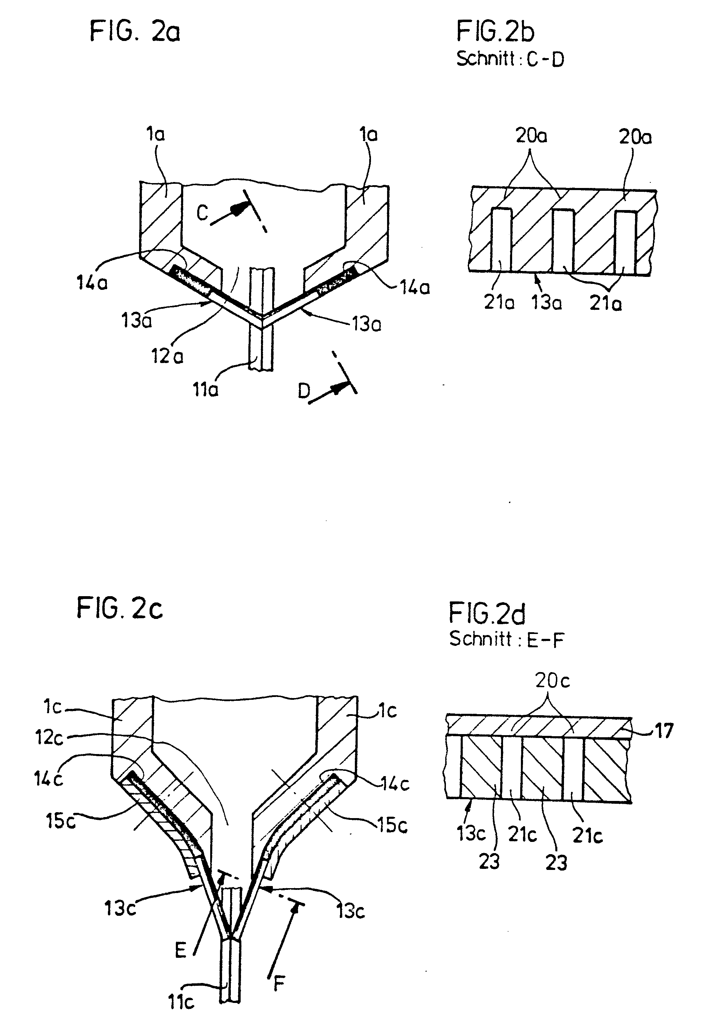

Erfindungsgemäße Ausbildungen der in Figur 1 schematisch dargestellten Dichtlippen 13 sind vergrößert in Figur 2a-g gezeigt. In Figur 2a wird der Schlitz 12a eines Gehäuses 1a mittels zweier dachförmig aneinanderstoßender Dichtlippen 13a abgedichtet, durch die ein Mitnehmer 11a hindurchgreift. Die Dichtlippen 13a sind auf dem Schlitz 12a benachbarten Außenflächen 14a des Gehäuses 1a durch Kleben befestigt und weisen Gelenke 20a in Form von Querschnittsverengungen auf, die durch schlitzartige Ausnehmungen 21a in den Dichtlippen 13a in äquidistanten Abständen gebildet sind (Figur 2b). Die Ausnehmungen 21a verlaufen quer zur Längserstreckung der Dichtlippen 13a und sind im wesentlichen nur im Bereich des Schlitzes 12a vorgesehen ; im Bereich der Außenflächen 14a des Gehäuses 1a weisen die Dichtlippen 13a aus Gründen einer stabilen Befestigung an den Außenflächen 14a keine Ausnehmungen 21a auf.

In Figur 2c wird der Schlitz 12c eines Gehäuses 1c mittels zweier unter einem spitzen Winkel dachförmig aneinanderstoßender Dichtlippen 13c abgedichtet, durch die ein Mitnehmer 11c hindurchgreift. Die Dichtlippen 13c sind auf dem Schlitz 12c benachbarten konkav gekrümmten Außenflächen 14c des Gehäuses 1c durch entsprechend gekrümmte Formteile 15c befestigt und bestehen aus einer dünnen Schicht 17, die in äquidistanten Abständen Verstärkungsstreifen 23 aufweist, die beispielsweise durch Kleben auf der dünnen Schicht 17 befestigt sind. Durch die Ausnehmungen 21c zwischen den Verstärkungsstreifen 23 sind in der dünnen Schicht 17 Gelenke 20c ausgebildet (Figur 2d). Die Verstärkungen 23 verlaufen quer zur Längserstreckung der Dichtlippen 13c und sind im wesentlichen nur im
Bereich des Schlitzes 12c vorgesehen ; im Bereich der Außenflächen 14c des Gehäuses 1c
weisen die Dichtlippen 13c aus Gründen einer
stabilen Befestigung an den Außenflächen 14c
einen in Längserstreckung der Dichtlippen 13c
durchgehenden Verstärkungsstreifen auf, der
auch mit den Verstärkungsstreifen 23 aus einem
Stück in Form eines Kamms bestehen kann.

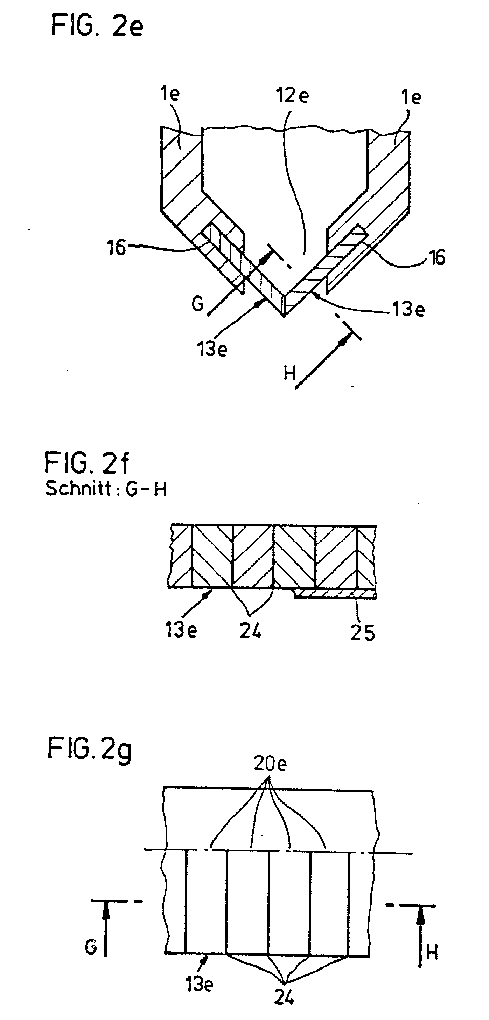

In Figur 2e wird der Schlitz 12e eines Gehäuses
1e mittels zweier dachförmig aneinanderstoßender Dichtlippen 13e abgedichtet, durch die ein
nichtgezeigter Mitnehmer hindurchgreift. Die
Dichtlippen 13e sind in dem Schlitz 12e benachbarten Nuten 16 durch Kleben befestigt und
weisen Gelenke 20e auf, die durch partielle Einschnitte 24 in den Dichtlippen 13e in äquidistanten Abständen gebildet sind (Figur 2f, g). Die
Einschnitte 24 verlaufen quer zur Längserstreckung der Dichtlippen 13e und sind im wesentlichen nur im Bereich des Schlitzes 12e
vorgesehen ; im Bereich der Nuten 16 des Gehäuses 1e weisen die Dichtlippen 13e keine Einschnitte 24 auf. Werden die Dichtlippen 13e auf
der Außenseite mit einer dünnen elastischen
Schicht 25 zumindest im Bereich der Einschnitte
24 überdeckt, erlauben sie eine Evakuierung des
Inneren des Gehäuses 1e.

Die schlitzartigen Ausnehmungen, die Verstärkungsstreifen und die Einschnitte in den
Dichtlippen können auch in Längserstreckung
der Dichtlippen verlaufen.

Infolge ihrer gelenkigen Ausbildung üben die
Dichtlippen nur geringe Reibungskräfte auf den
Mitnehmer bei der Meßbewegung aus, so daß
durch Verformungen des Mitnehmers bedingte
Meßfehler weitgehend vermieden werden ; ferner
wird das Auftreten unverschlossener Bereiche an
den Enden des Mitnehmers stark reduziert.

Die Dichtlippen 13 bestehen aus einem biegsamen Material, beispielsweise aus Kunststoff oder
Gummi.

Die Erfindung ist nicht auf gekapselte photoelektrische Meßeinrichtungen beschränkt,
sondern auch bei gekapselten optischen, magnetischen, induktiven und kapazitiven Längen- oder
Winkelmeßeinrichtungen einsetzbar. Bei gekapselten optischen Meßeinrichtungen, insbesondere Interferometern, ist der Mitnehmer beispielsweise gemäß der DE-C-24 21 371 mit einem
Reflektor des Interferometers und gemäß der DE-
C-24 25 066 mit einem Reflektor des Interferometers und mit einem Spiegel eines Autokollimator-
Meßsystems verbunden.

**Patentansprüche**

1. Gekapselte Längen- oder Winkelmeßeinrichtung zur Messung der Relativlage zweier zueinander beweglicher Objekte, deren mit einem der zu
messenden Objekte verbundenes Gehäuse (1) an
zumindest einer Seite einen in Bewegungsrichtung des beweglichen Objektes verlaufenden
Schlitz (12) aufweist, durch den ein mit dem
anderen Objekt verbundener Mitnehmer (11) in
das Innere des Gehäuses hineinragt, der seinerseits mit einer im Gehäuse untergebrachten,
zur Messung dienenden Baueinheit (5) verbunden ist, wobei biegsame Dichtlippen (13),
durch die der Mitnehmer hindurchgreift, derart
am Gehäuse befestigt sind, so daß sie am Ort
ihrer Befestigung um eine in Meßrichtung verlaufende Drehachse gelenkartig beweglich sind und
somit den Schlitz durchgehend abdichten, dadurch gekennzeichnet, daß längs der Dichtlippen
(13) zumindest teilweise Gelenke (20a, c, e) mit
quer zur Meßrichtung verlaufender Drehachse
zusätzlich vorgesehen sind.

2. Meßeinrichtung nach Anspruch 1, dadurch
gekennzeichnet, daß die Gelenke (20a) durch
schlitzartige Ausnehmungen (21a) in den Dichtlippen (13a) in bestimmten Abständen gebildet
sind.

3. Meßeinrichtung nach Anspruch 1, dadurch
gekennzeichnet, daß die Gelenke (20c) durch
Anordnung von Verstärkungsstreifen (23) auf einer dünnen Schicht (17) in bestimmten Abständen gebildet sind.

4. Meßeinrichtung nach Anspruch 1, dadurch
gekennzeichnet, daß die Gelenke (20e) durch
partielle Einschnitte (24) in den Dichtlippen (13e)
in bestimmten Abständen gebildet sind.

5. Meßeinrichtung nach Anspruch 4, dadurch
gekennzeichnet, daß die partiellen Einschnitte
(24) in den Dichtlippen (13e) mit einer dünnen
elastischen Schicht (25) überdeckt sind.

6. Meßeinrichtung nach Anspruch 1, dadurch
gekennzeichnet, daß die Dichtlippen (13) aus
einem biegsamen Material wie Kunststoff oder
Gummi bestehen.

**Claims**

1. Encased length or angle-measuring device
for measuring the relative position of two articles
movable relative to one another, of which the
housing (1) connected to one of the articles to be
measured has, on at least one side, a slit (12)
which extends in the direction of movement of
the movable article and through which an engagement means (11) connected to the other
article projects into the interior of the housing
and is itself connected to a constructional unit (5)
accommodated in the housing and serving for
measurement, flexible sealing lips (13), through
which the engagement means extends, being
fastened to the housing in such a way that, at the
location where they are fastened, they are movable in an articulated manner about an axis of
rotation extending in the measuring direction and
thus seal off the slit continuously, characterised
in that at least partial joints (20a, c, e) with an axis
of rotation extending transversely to the measuring direction are additionally provided along the
sealing lips (13).

2. Measuring device according to Claim 1,
characterised in that the joints (20a) are formed at specific distances from one another by slit-like recesses (21a) in the sealing lips (13a).

3. Measuring device according to Claim 1, characterised in that the joints (20c) are formed at specific distances from one another as a result of the arrangement of reinforcing strips (23) on a thin layer (17).

4. Measuring device according to Claim 1, characterised in that the joints (20e) are formed at specific distances from one another by partial incisions (24) made in the sealing lips (13e).

5. Measuring device according to Claim 4, characterised in that the partial incisions (24) in the sealing lips (13e) are covered with a thin elastic layer (25).

6. Measuring device according to Claim 1, characterised in that the sealing lips (13) consist of a flexible material, such as plastic or rubber.

## Revendications

1. Dispositif étanche de mesure d'angles ou de longueurs, pour mesurer la position relative de deux objets mobiles l'un par rapport à l'autre, le boîtier (1) de ce dispositif étant solidarisé à l'un des objets à mesurer et présentant en au moins l'un de ses côtés une fente (12) qui est orientée dans la direction du mouvement de l'objet mobile et par laquelle un entraîneur (11) solidarisé à l'autre objet pénètre à l'intérieur du boîtier, cet entraîneur étant lu .nême solidarisé à un composant (5) situé dans le boîtier et servant à la mesure, des lèvres d'étanchéité flexibles (13) par lesquelles passe l'entraîneur étant fixées au boîtier de manière à être dotées, à l'endroit de leur fixation, d'une mobilité d'articulation autour d'un axe de rotation dirigé dans la direction de la mesure et à réaliser ainsi l'étanchéité de la fente, d'un bout à l'autre de celle-ci, caractérisé en ce que des articulations au moins partielles (20a, c, e) dont l'axe de rotation est dirigé transversalement à la direction de mesure sont prévues, en plus, le long des lèvres d'étanchéité (13).

2. Dispositif de mesure selon la revendication 1, caractérisé en ce que les articulations (20a) sont constituées par des évidements du genre fente (21a) formés dans les lèvres d'étanchéité (13a), à intervalles déterminés.

3. Dispositif de mesure selon la revendication 1, caractérisé en ce que les articulations (20c) sont formées par agencement de bandes de renforcement (23) sur une couche mince (17), à intervalles déterminés.

4. Dispositif de mesure selon la revendication 1, caractérisé en ce que les articulations (20e) sont formées par des entailles partielles (24) dans les lèvres d'étanchéité (13e), à intervalles déterminés.

5. Dispositif de mesure selon la revendication 4, caractérisé en ce que les entailles partielles (24) dans les lèvres d'étanchéité (13e) sont recouvertes d'une mince couche élastique (25).

6. Dispositif de mesure selon la revendication 1, caractérisé en ce que les lèvres d'étanchéité (13) sont en une matière flexible telle que matière plastique ou caoutchouc.

## FIG. 1a
Schnitt : A - B

## FIG.1b

0 092 664

FIG. 2a

FIG.2b
Schnitt : C-D

FIG. 2c

FIG.2d
Schnitt : E-F

## FIG. 2e

## FIG. 2f
Schnitt: G-H

## FIG. 2g